# EUROPÄISCHE PATENTSCHRIFT

(11) **EP 0 985 317 B1**
(45) Veröffentlichungstag und Bekanntmachung des Hinweises auf die Patenterteilung: **21.11.2001**
(21) Anmeldenummer: 98933476.8
(22) Anmeldetag: 07.05.1998
(51) Int. Cl.: H04N 7/26, H04N 7/30

(54) **VERFAHREN ZUR CODIERUNG UND DECODIERUNG EINES DIGITALISIERTEN BILDES**
METHOD FOR CODING AND DECODING A DIGITALIZED IMAGE
PROCEDE DE CODAGE ET DE DECODAGE D'UNE IMAGE NUMERISEE

(30) Priorität: 07.05.1997 DE 19719470
(43) Veröffentlichungstag der Anmeldung: 15.03.2000
(73) Patentinhaber: Infineon Technologies AG, 81669 München (DE)
(72) Erfinder: KUTKA, Robert, D-82269 Geltendorf (DE); PANIS, Stathis, CY-3090 Limassol (CY)
(74) Vertreter: Banzer, Hans-Jörg, Dipl.-Ing.
(86) Internationale Anmeldenummer: DE9801276
(87) Internationale Veröffentlichungsnummer: WO9851084

(56) Entgegenhaltungen:
- WO-A-98/15125
- US-A- 5 418 714
- US-A- 5 568 196
- ZENG W ET AL: "DIRECTIONAL SPATIAL INTERPOLATION FOR DCT-BASED LOW BIT RATE CODING" PROCEEDINGS OF THE INTERNATIONAL CONFERENCE ON ACOUSTICS, SPEECH, AND SIGNAL PROCESSING (ICASSP), Bd. 4, 7. - 10. Mai 1996, Seiten 2100-2103, XP002050992 INSTITUTE OF ELECTRICAL AND ELECTRONICS ENGINEERS
- ZHENYA HE ET AL: "AN ADAPTIVE IMAGE CODING TECHNIQUE USING INTERPOLATIVE MIXED VQ" PROCEEDINGS OF THE INTERNATIONAL SYMPOSIUM ON CIRCUITS AND SYSTEMS, SAN DIEGO, MAY 10 - 13, 1992, Bd. 5 OF 6, 10. Mai 1992, Seiten 2300-2303, XP000338451 INSTITUTE OF ELECTRICAL AND ELECTRONICS ENGINEERS
- HUIFANG SUN ET AL: "SUBSAMPLED VETOR QUANTIZATION WITH NONLINEAR ESTIMATION USING NEURAL NETWORK APPROACH" VISUAL COMMUNICATION AND IMAGE PROCESSING '91: VISUAL COMMUNICATION, BOSTON, NOV. 11 - 13, 1991, Bd. PART 1, Nr. VOL. 1605, 11. November 1991, Seiten 214-220, XP000479232 KOU-HU TZOU;TOSHIO KOGA
- KUTKA R ET AL: "Improving the image quality of block-based video coders by exploiting interblock redundancy" , FIRST INTERNATIONAL WORKSHOP ON WIRELESS IMAGE/VIDEO COMMUNICATIONS (CAT. NO.96TH8220), PROCEEDINGS OF FIRST INTERNATIONAL WORKSHOP ON WIRELESS IMAGE/VIDEO COMMUNICATIONS, LOUGHBOROUGH, UK, 4-5 SEPT. 1996 , ISBN 0-7803-3610-0, 1996, NEW YORK, NY, USA, IEEE, USA, PAGE(S) 48 - 56 XP002078094 siehe Abschnitt "3. Adaptive removal of blocking artifacts"
- PANIS S ET AL: "Reduction of block artifacts by selective removal and reconstruction of the block borders" PICTURE CODING SYMPOSIUM. PCS 97, BERLIN, GERMANY, 10-12 SEPT. 1997, Nr. 143, Seiten 705-708, XP002078093 ISSN 0341-0196, ITG-Fachberichte, 1997, VDE-Verlag, Germany

## Beschreibung

Bei Bildkompressionsverfahren zur Codierung bzw. Decodierung digitalisierter Bilder werden die Bilder üblicherweise in Bildsegmente unterteilt.

Man unterscheidet zwei Ansätze zur Bildcodierung, die objektbasierte Bildcodierung und die blockbasierte Bildcodierung. Objektbasierte Verfahren zur Bildcodierung sind in [1] beschrieben. Eine Übersicht über blockbasierte Bildcodierungsverfahren sind in [2] (MPEG), [3] (H.263) und [4] (JPEG) zu finden.

Bei den blockbasierten Bildcodierungsverfahren wird das Bild in sog. Bildblöcke aufgeteilt, die üblicherweise eine rechteckige Form aufweisen und jeweils 8x8 oder 16x16 Bildpunkte aufweisen. Bei den bekannten Verfahren werden die Blöcke mit Hilfe einer Transformationscodierung, vorzugsweise der diskreten Cosinustransformation (DCT), der Wavelet-Transformation oder einer Transformation mittels Vektorquantisierung transformiert.

Bei der Übertragung von Bewegtbildern über schmalbandige Kanäle, wie z.B. 48 kBit/sec oder niedriger für Bildtelefonanwendungen, müssen Abstriche bei der Bildqualität in Kauf genommen werden. Die auffälligsten Störungen sind die als Blockartefakte bei der blockbasierten Bildcodierung bzw. als Objektrandartefakte bei objektbasierter Bildcodierung bekannten Helligkeitssprünge, d.h. die abrupten Änderungen der Werte der Codierungsinformation, die den einzelnen Bildpunkten zugeordnet ist, hervorgerufen durch Unstetigkeitsstellen an den Bildblockrändern bzw. an den Bildobjekträndern.

Unter Codierungsinformation ist im weiteren beispielsweise Luminanzinformation oder Chrominanzinformation zu verstehen, die jeweils den Bildpunkten eindeutig zugeordnet ist.

Es sind zwei unterschiedliche Ansätze bekannt, um die Blockartefakte zu reduzieren.

Der erste Ansatz basiert auf Korrekturen im Frequenzbereich der Spektraltransformation. Ein mit Spatial-Shaping bezeichnetes Verfahren verringert die Randartefakte auf Kosten der Bildqualität im Blockinneren. Dieses Verfahren ist aus [5] bekannt. Ein weiteres Verfahren, welches auf Korrekturen im Frequenzbereich basiert, verwendet die Prädiktion der DCT-Koeffizienten. Durch diese in [6] beschriebene Vorgehensweise wird zwar die Qualität im Blockinneren verbessert, jedoch werden die Blockartefakte nur teilweise verringert.

Der zweite Ansatz zur Reduktion von Blockartefakten basiert auf Korrekturen im Ortsbereich. Aus [7] ist es bekannt, die Bildpunkte an den Blockrändern einer Tiefpaßfilterung zu unterziehen, wodurch die Unstetigkeitsstellen geglättet werden und weniger störend erscheinen. Aus [8] ist es bekannt, für verschiedene Bildblöcke unterschiedliche Filter zu verwenden, abhängig beispielsweise von der Quantisierung des Bildblockes bzw. abhängig von dem Bewegungsvektor.

Aus [9] ist ein Verfahren zur Steuerung verschiedener Übertragungsparameter im Rahmen des H.263-Standards bekannt, welches als H.245-Standard bezeichnet wird. Im Rahmen des H.245-Standards ist es bekannt, bestimmte spezielle Übertragungseigenschaften von einer ersten Anordnung der zweiten Anordnung, mit der die Kommunikation angestrebt wird, über eine sog. Capability-Tabelle mitzuteilen, in der das jeweilige Feature angegeben ist, welches im Rahmen der Kommunikationsverbindung Verwendung finden soll.

Aus der Druckschrift Zent W. et al: "Directional Spatial Interpolation for DCT-Based Low Bit Rate Coding" Proceedings of the International Conference on Acoustics, Speech and Signal Processing (ICASSP), Vol. 4, 7-10 May 1996, pages 2100-2103, XP002050992 Institute of Electrical and Electronics Engineers, ist ein blockbasiertes Codierungsschema für digitalisierte Bilder bekannt, wobei ein digitalisiertes Bild in mehrere Blöcke unterteilt ist und lediglich ein Teil der Blöcke codiert und an einen Empfänger übertragen wird. Im Empfänger werden die fehlenden Blöcke, welche nicht übertragen worden sind, durch Interpolation der codierten übertragenen Blöcke, welche in dem digitalisierten Bild zu den jeweils nicht codierten fehlenden Blöcken benachbart sind, wiedergewonnen.

Der Erfindung liegt das Problem zugrunde, ein Verfahren und eine Anordnung zur Codierung und zur Decodierung eines digitalisierten Bildes anzugeben, bei dem gegenüber den bekannten Verfahren die benötigte Übertragungskapazität verringert wird, ohne daß die Bildqualität merklich verschlechtert wird.

Das Problem wird durch ein Verfahren gemäß Patentanspruch 1 oder 2 bzw. eine Anordnung gemäß Patentanspruch 18 oder 19 gelöst.

Bei dem Verfahren gemäß Patentanspruch 1 wird das digitalisierte Bild, welches Bildpunkte aufweist, in mehrere Bildsegmente aufgeteilt. Die Aufteilung, d.h. die Gruppierung erfolgt derart, daß für mindestens einen Teil des Bildes zwischen Bildsegmenten mindestens ein Bildpunkt nicht einem Bildsegment zugeordnet wird. Es werden nur die Bildpunkte tatsächlich codiert, die einem Bildsegment zugeordnet wurden.

Bei dem Verfahren gemäß Patentanspruch 2 zur Codierung und Decodierung eines digitalisierten Bildes werden wiederum die Bildpunkte in mehrere Bildsegmente gruppiert. Die Gruppierung erfolgt derart, daß für mindestens einen Teil des Bildes zwischen Bildsegmenten mindestens ein Bildpunkt nicht einem Bildsegment zugeordnet wird. Es werden nur die Bildpunkte codiert, die einem Bildsegment zugeordnet wurden. Die codierten Bildsegmente werden übertragen und die Bildsegmente werden decodiert. Zwischen den decodierten Bildsegmenten werden neue Bildpunkte eingefügt entsprechend den nicht codierten Bildpunkten des codierten Bildes. Zwischen den Bildsegmenten wird eine Filterung durchgeführt, wodurch den neuen Bildpunkten Codierungsinformation zugeordnet wird.

Anschaulich kann die Erfindung darin gesehen werden, daß bei dem Verfahren auf die Übertragung von Bildzeilen und Bildspalten zwischen Bildsegmenten, beispielsweise zwischen Bildblöcken verzichtet wird. Das Blockraster bei Verwendung eines blockbasierten Bildcodierungsverfahrens wird derart gespreizt, daß Zwischenräume zwischen den zu codierenden Bildblöcken verbleiben und die Zwischenräume nach der Decodierung interpoliert werden.

Durch diese Vorgehensweise wird die benötigte Übertragungskapazität verringert ohne daß die Bildqualität im Inneren des Bildsegments merklich verschlechtert wird. Ferner werden die Blockartefakte bzw. die Randartefakte der Bildobjekte erheblich verringert.

Vorteilhafte Weiterbildungen der Erfindung ergeben sich aus den abhängigen Ansprüchen.

Es ist vorteilhaft, als Filterung eine Tiefpaßfilterung auf die Bildsegmente anzuwenden, wodurch eine gute Glättung der Bildsegmentkanten erreicht wird. Dabei ist es zur Einsparung erforderlicher Rechenzeit vorteilhat, die Filterung im wesentlichen an den Bildsegmentkanten durchzuführen.

Ferner ist es vorteilhaft, eine weitere Filterung des zu codierenden Bildes vor der Spreizung und der Codierung durchzuführen. Die weitere Filterung entspricht einer Subsampling-Filterung, wie sie beim Unterabtasten von Bildern zur Verbesserung der Bildqualität verwendet wird.

Ferner ist es in einer Weiterbildung vorteilhaft, eine Interpolationsfilterung nach der Decodierung durchzuführen, welche im wesentlichen an den Bildsegmentkanten wirkt. Dies entspricht einem Oversampling-Filter, wie es beim Vergrößern von Bildern eingesetzt wird.

Das Verfahren ist sehr einfach durchzuführen bei blockbasierten Bildcodierungsverfahren, bei denen die Bildsegmente Bildblöcke sind. Zwischen den Bildblöcken des Bildes wird mindestens jeweils ein Bildpunkt keinem Bildblock zugeordnet. Somit wird eine sehr einfache Aufteilung der Bildpunkte zu den Bildblöcken und damit verbunden eine sehr einfache Auswahl nicht zu codierender Bildpunkte erreicht.

Um die Qualität des decodierten Bildes weiter zu erhöhen ist es vorteilhaft, für unterschiedliche Bildsegmente unterschiedliche Filter zu verwenden.

Dabei ist es vorteilhaft, die Filter abhängig von der Bildqualität eines Bildblockes auszuwählen, wobei die Stärke des verwendeten Filters zunimmt mit der Verringerung der Bildqualität des Bildblocks.

Ferner ist es vorteilhaft, die unterschiedlichen Filter abhängig von dem Bewegungsvektor eines Bildblocks auszuwählen, wobei die Stärke des verwendeten Filters zunimmt mit der Größe des Bewegungsvektors, der dem jeweiligen Bildblock zugeordnet ist.

Das Verfahren eignet sich sehr gut für den Einsatz zur Bildcodierung nach dem H.263-Standard.

Eine vorteilhafte Möglichkeit zur Integration des Verfahrens in den H.263-Standard ist die Verwendung der Capability-Tabelle gemäß dem H.245-Standard, in dem die Option zur Durchführung dieses Verfahrens als eigenes Leistungsmerkmal eingetragen ist, und im Rahmen der Kommunikationssteuerung, die gemäß dem H.245-Standard durchgeführt wird, möglich wird.

In den Figuren ist ein Ausführungsbeispiel der Erfindung beschrieben, welches im weiteren näher erläutert wird.

Es zeigen
- Fig. 1a bis 1f: das Prinzip des Verfahrens für ein symbolisch dargestelltes digitalisiertes Bild mit Bildblöcken;
- Fig. 2: eine Anordnung mit einer Kamera, zwei Rechneranordnungen und zwei Bildschirmen, mit denen das Verfahren durchgeführt werden kann;
- Fig. 3: eine Blockschaltskizze, mit der symbolisch die Integration des Verfahrens in das Verfahren gem. dem H.263-Standard dargestellt ist.

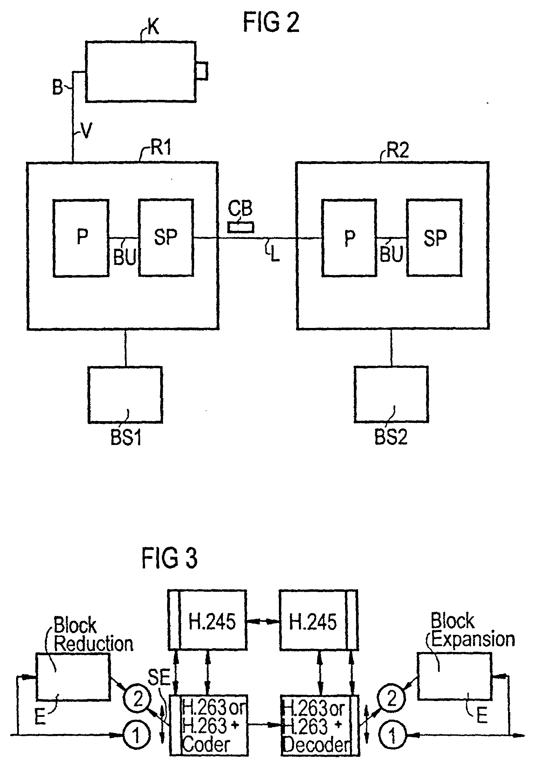

Fig. 2 zeigt eine Kamera K, die mit einem ersten Rechner R1 über eine Verbindung V verbunden ist. Die Kamera K liefert eine Folge digitalisierter Bilder B, die dem ersten Rechner R1 zugeführt werden. Der erste Rechner R1 weist ebenso wie ein zweiter Rechner R2 einen Prozessor P sowie einen Speicher SP zur Speicherung der Bilddaten auf, die über einen Bus BU miteinander verbunden sind. Der erste Rechner R1 und der zweite Rechner R2 sind über eine Leitung L miteinander verbunden. Der erste Rechner R1 und der zweite Rechner R2 sind jeweils mit einem ersten Bildschirm BS1 bzw. einem zweiten Bildschirm BS2 verbunden zur Darstellung der von der Kamera K aufgenommenen und eventuell codierten und decodierten Bilder B.

Von der Kamera K wird eine Szene aufgenommen und als Folge von Bildern B dem ersten Rechner R1 zugeführt und in dem ersten Rechner R1 gemäß dem Verfahren zur Codierung, wie es im weiteren beschrieben wird, codiert. Die codierten Bilder CB werden über die Leitung L zu dem zweiten Rechner R2 übertragen und in dem zweiten Rechner R2 gemäß dem im weiteren beschriebenen Verfahren zur Decodierung der codierten digitalen Bilder CB decodiert.

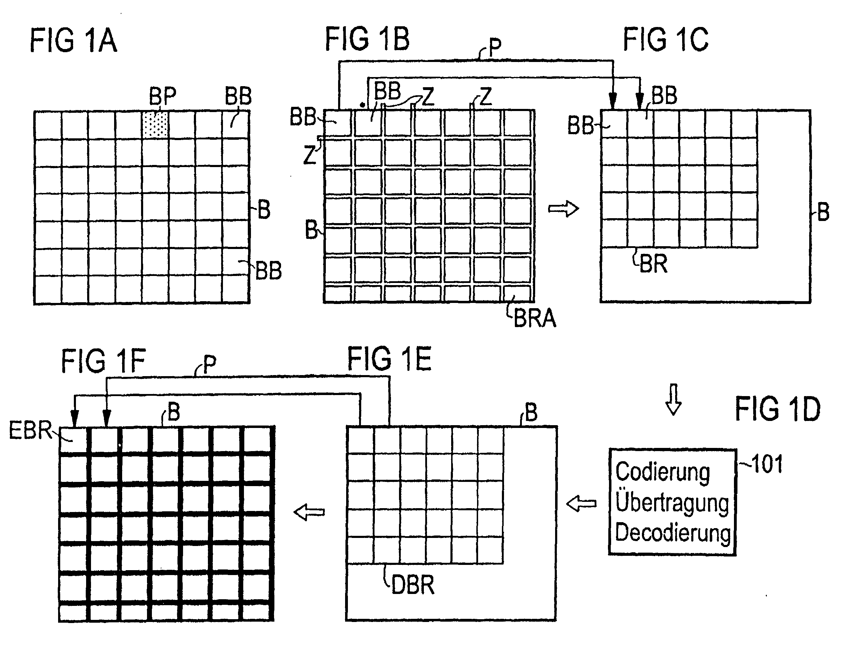

Ein Bild B ist in Fig. 1a symbolisch dargestellt. In Fig.la ist das Bild B in Bildblöcke BB mit jeweils 8x8 Bildpunkten BP unterteilt. Dies ist die übliche Vorgehensweise bei der blockbasierten Bildcodierung.

Fig. 1b zeigt das Bild B mit Bildpunkten BP, die wiederum zu Bildblöcken BB mit jeweils 8x8 Bildpunkten BP gruppiert werden. Jedoch ist zwischen den einzelnen Bildblöcken BB jeweils ein Zwischenraum Z von mindestens einem Bildpunkt BP vorgesehen. Die Bildpunkte BP, die sich in dem Zwischenraum Z befinden, werden, wie im weiteren beschrieben wird, nicht codiert.

Anschaulich bedeutet dies, daß die Bildpunkte BP der Zwischenräume Z bei der Codierung einfach "weggelassen" werden. Durch Streichen der Bildpunkte BP des Zwischenraums Z entsteht ein reduziertes Bildraster BR des Bildes B, welches lediglich Bildpunkte BP aufweist, die Bildblöcken BB zugeordnet wurden (vgl. Fig. 1c).

Durch Pfeile P von Fig. 1b zu Fig. 1c ist die Abbildung der einzelnen Bildblöcke BB von dem Blockraster mit Zwischenräumen Z zu dem reduzierten Bildraster BR symbolisch dargestellt.

Für das reduzierte Bildraster BR wird die Codierung durchgeführt, also nur für die Bildpunkte BP der Bildblöcke BB. Die Codierung erfolgt als Transformationscodierung nach der diskreten Cosinustransformation (DCT).

Als Codierungsverfahren wird das Verfahren gemäß dem H.263-Standard eingesetzt. Die codierten Bilddaten CB werden zu dem zweiten Rechner R2 übertragen, dort empfangen und decodiert (Schritt 101) (vgl. Fig. 1d).

Nach der Decodierung, u.a. unter Verwendung der inversen diskreten Cosinustransformation gemäß dem H.263-Verfahren, ergibt sich ein decodiertes reduziertes Bildraster DBR, welches dem reduzierten Bildraster RB entspricht (vgl. Figur 1e).

Das decodierte reduzierte Bildraster DBR wird nun auf ein expandiertes Bildraster EBR auf die ursprüngliche Größe des Bildes B expandiert, indem zwischen die Bildblöcke BB wieder die Zwischenräume Z mit den nichtcodierten Bildpunkten aufgefüllt werden (vgl. Figur 1f).

Bildblöcke BB, die durch die Zwischenräume Z an dem Bildrand BRA liegen, und nicht 8x8 Bildpunkte aufweisen, werden durch Padding, d.h. Auffüllen der Bildblöcke BB mit Codierungsinformation durch Extrapolation der in dem Bildblock tatsächlich vorhandenen Bildpunkte BP verarbeitet. Das Auffüllen kann durch Zuordnung der Codierungsinformation der Bildpunkte, die bisher nicht in dem Bildblock des Bildrandes BRA enthalten waren, mit einem konstanten Wert erfolgen.

Die Zusammenhänge der decodierten Bildblöcke BB in dem decodierten reduzierten Blockraster DBR aus Fig. le und der Bildblöcke BB in Fig. 1f nach Einfügung der Zwischenräume Z zeigen Pfeile P in Figur 1e und 1f.

Es werden zwischen den decodierten Bildsegmenten, d.h. den Bildblöcken BB neue Bildpunkte in das decodierte reduzierte Blockraster DBR eingefügt entsprechend den nichtcodierten, d.h. "weggelassenen" Bildpunkten BP des codierten Bildes.

In einem letzten Schritt wird in dem expandierten Bildraster EBR eine Interpolationsfilterung zwischen den einzelnen Bildblöcken BB über die Blockränder hinweg und über die Zwischenräume Z, d.h. über die Bildpunkte der Zwischenräume Z, durchgeführt. Damit wird eine Interpolation der "fehlenden" Bildpunkte erreicht.

Als Filterung wird eine Tiefpaßfilterung an den Blockrändern durchgeführt. Es werden mehrere Filter für unterschiedliche Bildblöcke entsprechend der Semantik der einzelnen Bildblöcke BB gewählt. Die Auswahl der Filter erfolgt abhängig von dem Bewegungsvektor eines Bildblocks, wobei die Stärke des verwendeten Tiefpaßfilter zunimmt mit der Größe des Bewegungsvektors und/oder abhängig von der Bildqualität eines Bildblocks, wobei die Stärke des verwendeten Tiefpaßfilters zunimmt mit der Verringerung der Bildqualität des Bildblocks BB.

Im weiteren werden Varianten des oben beschriebenen Ausführungsbeispiels aufgezeigt.

Es ist nicht erforderlich, daß das Bild B in Bildblöcke BB aufgeteilt wird. Es ist ebenso möglich, ein objektbasiertes Bildcodierungsverfahren im Rahmen des erfindungsgemäßen Verfahrens einzusetzen, wobei die Bildpunkte dann in mehrere Bildsegmente beliebiger Form gruppiert werden.

Ferner kann jedes beliebige objektbasierte bzw. blockbasierte Bildcodierungsverfahren, z.B. MPEG, JPEG, H.263 eingesetzt werden, ebenso wie jede beliebige Transformationscodierung, beispielsweise die Diskrete Sinus Transformation, eine Wavelet-Transformation oder eine Transformation durch Vektorquantisierung.

Ferner ist in Fig. 3 eine Möglichkeit symbolisch dargestellt, wie das Verfahren in den bestehenden H.263-Standard integriert werden kann. Hierzu wird der Mechanismus der sog. Capability-Tabelle CT gemäß dem H.245-Standard (vgl. Fig. 3) eingesetzt. Über ein Schaltelement SE kann ausgewählt werden, ob das übliche H.263-Verfahren oder das um das erfindungsgemäße Verfahren erweiterte Verfahren zur Bildcodierung verwendet werden soll.

Die Erweiterung ist in Fig. 3 durch einen Block E symbolisch dargestellt. Wird die Erweiterung gewählt, so wird ein entsprechender Parameter in der Capability-Tabelle CT in der ersten Rechneranordnung R1 gespeichert und im Rahmen des Aufbaus der Kommunikationsverbindung mit der zweiten Rechnereinheit R2, die ebenso Module zur Durchführung des H.245-Standards und des H.263-Standards und des Erweiterungsmoduls E aufweist, vorgeschlagen.

Nach erfolgter Einigung zwischen den Rechneranordnungen R1, R2 über das zu verwendende Bildcodierungsverfahren, wird entweder das Verfahren gemäß H.263 oder das um das erfindungsgemäße Verfahren erweiterte Verfahren verwendet.

Anschaulich kann die Erfindung darin gesehen werden, daß bei dem Verfahren auf die Übertragung von Bildzeilen und Bildspalten zwischen Bildsegmenten, beispielsweise zwischen Bildblöcken verzichtet wird. Das Blockraster bei Verwendung eines blockbasierten Bildcodierungsverfahrens wird derart gespreizt, daß Zwischenräume zwischen den zu codierenden Bildblöcken verbleiben und die Zwischenräume nach der Decodierung interpoliert werden.

Im Rahmen dieses Dokuments wurden folgende Veröffentlichungen zitiert:
[1] S. Hofmeir, Multimedia für unterwegs, Funkschau, Nr. 7, S. 75 - 77, 1996
[2] D. Le Gall, MPEG: A Video Compression Standard for Multimedia Applications, Communications of the ACM, Vol. 34, No. 4, S. 47 - 58, April 1991
[3] Ming Liou, Overview of the px64 kbit/s Video Coding Standard, Communications of the ACM, Vol. 34, No. 4, S. 60 - 63, April 1991
[4] G. Wallace, The JPEG Still Picture Compression Standard, Communications of the ACM, Vol. 34, No. 4, S. 31 - 44, April 1991
[5] W. Gerod et al, Spatial Shaping: A fully compatible Improvement of DCT-Coding, Picture Coding Symposium, Lausanne, 1993
[6] R. Kutka, A. Kaup und M. Hager, Quality improvement of low data-rate compressed signals by pre- and postprocessing, Digital Compression Technologies and Systems for Video Communications, SPIE, Vol. 2952, S. 42-49, 07. bis 09. Oktober 1996
[7] S. Minami und A. Zakhor, An optimization approach for removing blocking effects in transform coding, IEEE Transactions on Circuit Syst. Video Technology, Vol. 5, Nr. 2, S. 74-82, April 1995
[8] H.245-Standard, ITU Standard Recommendation
[9] DE 196 040 50 A1

## Patentansprüche

1. Verfahren zur Codierung eines digitalisierten Bildes,
wobei das digitalisierte Bild (B) gemäß einem bestimmten Bildraster in mehrere Bildsegmente (BB) gruppierte Bildpunkte (BP) umfasst,
wobei das Bildraster derart gespreizt wird, daß für mindestens einen Teil des Bildes (B) zwischen Bildsegmenten (BB) ein Zwischenraum (Z) von mindestens einem weiteren Bildpunkt (BP), welcher nicht einem Bildsegment (BB) zugeordnet ist, vorhanden ist, und
wobei nur die einem Bildsegment (BB) zugeordneten Bildpunkte (BP), nicht jedoch die sich in einem Zwischenraum (Z) befindenden weiteren Bildpunkte (BP), codiert werden.

2. Verfahren zur Codierung und Decodierung eines digitalisierten Bildes mit Bildpunkten,
wobei in einer ersten Anordnung (R1) die Bildpunkte (BP) des digitalisierten Bildes (B) gemäß einem bestimmten Bildraster in mehrere Bildsegmente (BB) gruppiert werden,
wobei in der ersten Anordnung (R1) das Bildraster derart gespreizt wird, daß für mindestens einen Teil des Bildes (B) zwischen Bildsegmenten (BB) ein Zwischenraum (Z) von mindestens einem weiteren Bildpunkt (BP), welcher nicht einem Bildsegment (BB) zugeordnet ist, vorhanden ist,
wobei in der ersten Anordnung (R1) nur die einem Bildsegment (BB) zugeordneten Bildpunkte (BP), nicht jedoch die sich in einem Zwischenraum (Z) befindenden weiteren Bildpunkte (BP), codiert werden,
wobei die codierten Bildsegmente (BB) von der ersten Anordnung (R1) zu einer zweiten Anordnung (R2) übertragen werden,
wobei in der zweiten Anordnung (R2) die Bildsegmente (BB) decodiert werden,
wobei in der zweiten Anordnung (R2) zwischen den decodierten Bildsegmenten (BB) neue Bildpunkte (BP) eingefügt werden entsprechend den nicht-codierten weiteren Bildpunkten (BP) des codierten Bildes (B), und
wobei in der zweiten Anordnung (R2) zwischen den Bildsegmenten (BB) eine Interpolation durchgeführt wird, wodurch den neuen Bildpunkten (BP) Codierungsinformation zugeordnet wird.

3. Verfahren nach Anspruch 1 oder 2,
bei dem eine Filterung des zu codierenden Bildes (B) vor der Codierung erfolgt.

4. Verfahren nach Anspruch 2,
bei dem als Interpolation eine Tiefpassfilterung erfolgt.

5. Verfahren nach Anspruch 2,
- bei dem eine Filterung des zu codierenden Bildes (B) vor der Codierung erfolgt, und
- bei dem als Interpolation eine Tiefpassfilterung erfolgt.

6. Verfahren nach Anspruch 4 oder 5,
bei dem die Tiefpassfilterung im wesentlichen an den Bildsegmenten erfolgt.

7. Verfahren nach einem der Ansprüche 4 bis 6,
bei dem die Interpolationsfilterung nach der Decodierung erfolgt.

8. Verfahren nach Anspruch 7,
bei dem die Interpolationsfilterung im wesentlichen an den Bildsegmentkanten erfolgt.

9. Verfahren nach einem der Ansprüche 1 bis 8,
bei dem die Bildsegmente durch Bildblöcke (BB) realisiert werden.

10. Verfahren nach Anspruch 9,
bei dem zwischen den Bildblöcken (BB) des Bildes (B) mindestens jeweils ein Bildpunkt (BP) keinem Bildblock (BB) zugeordnet wird.

11. Verfahren nach einem der Ansprüche 2 bis 10,
bei dem mehrere Filter für die Interpolation verwendet werden.

12. Verfahren nach Anspruch 11,
bei dem die Auswahl der Filter abhängig von der Bildqualität eines Bildblockes (BB) erfolgt, wobei die Stärke des verwendeten Filters zunimmt mit der Verringerung des Bildqualität des Bildblocks (BB).

13. Verfahren nach Anspruch 11 oder 12,
bei dem die Auswahl der Filter abhängig von dem Bewegungsvektor eines Bildblocks (BB) erfolgt, wobei die Stärke des verwendeten Filters zunimmt mit der Größe des Bewegungsvektors, der dem jeweiligen Bildblock (BB) zugeordnet ist.

14. Verfahren nach einem der Ansprüche 1 bis 8,
bei dem die Codierung nach dem H.263-Standard erfolgt.

15. Verfahren nach Anspruch 2,
- bei dem die Codierung nach dem H.263-Standard erfolgt, und
- bei dem die Codierung von der ersten Anordnung (R1) der zweiten Anordnung (R2) unter Verwendung einer Capability-Tabelle gemäß dem H.245-Standard mitgeteilt wird.

16. Verfahren nach einem der Ansprüche 1 bis 15,
bei dem eine Bewegungskompensation unter Verwendung des digitalisierten Bildes (B) durchgeführt wird.

17. Verfahren nach einem der vorhergehenden Ansprüche,
bei dem Bildsegmente (BB), welche nach der Spreizung des Bildrasters aufgrund der Zwischenräume (Z) am Rand (BRA) des digitalisierten Bildes (B) liegen und nicht eine bestimmte Anzahl an Bildpunkten (BP) aufweisen, durch Codierungsinformation mit einem konstanten Wert aufgefüllt werden.

18. Anordnung zur Codierung eines digitalisierten Bildes,
wobei eine erste Prozessoreinheit (P) vorgesehen ist, die derart eingerichtet ist, daß
- das digitalisierte Bild (B) gemäß einem bestimmten Bildraster in mehrere Bildsegmente (BB) gruppierte Bildpunkte (BP) umfasst,
- das Bildraster derart gespreizt wird, daß für mindestens einen Teil des Bildes (B) zwischen Bildsegmenten (BB) ein Zwischenraum (Z) von mindestens einem weiteren Bildpunkt (BP), welcher nicht einem Bildsegment (BB) zugeordnet ist, vorhanden ist, und
- nur die einem Bildsegment (BB) zugeordneten Bildpunkte (BP), nicht jedoch die sich in einem Zwischenraum (Z) befindenden weiteren Bildpunkte (BP), codiert werden.

19. Anordnung zur Codierung und Decodierung eines digitalisierten Bildes mit Bildpunkten,
mit einer ersten Anordnung (R1), bei der eine erste Prozessoreinheit (P) vorgesehen ist, die derart eingerichtet ist, daß
- die Bildpunkte (BP) des digitalisierten Bildes (B) gemäß einem bestimmten Bildraster in mehrere Bildsegmente (BB) gruppiert werden,
- das Bildraster derart gespreizt wird, daß für mindestens einen Teil des Bildes (B) zwischen Bildsegmenten (BB) ein Zwischenraum (Z) von mindestens einem weiteren Bildpunkt (BP), welcher nicht einem Bildsegment (BB) zugeordnet ist, vorhanden ist, und
- nur die einem Bildsegment (BB) zugeordneten Bildpunkte (BP), nicht jedoch die sich in einem Zwischenraum (Z) befindenden weiteren Bildpunkte (BP), codiert werden,
mit einem Übertragungsmittel (L), mit dem die codierten Bildsegmente (BB) von der ersten Anordnung (R1) zu einer zweiten Anordnung (R2) übertragen werden,
wobei bei der zweiten Anordnung (R2) eine zweite Prozessoreinheit (P) vorgesehen ist, die derart eingerichtet ist, daß
- die Bildsegmente (BB) decodiert werden,
- zwischen den decodierten Bildsegmenten (BB) neue Bildpunkte (BP) eingefügt werden entsprechend den nicht-codierten Bildpunkten (BP) des codierten Bildes (B), und
- zwischen den Bildsegmenten (BB) eine Interpolation durchgeführt wird, wodurch den neuen Bildpunkten (BP) Codierungsinformation zugeordnet wird.

20. Anordnung nach Anspruch 19, bei der die zweite Prozessoreinheit (P) derart eingerichtet ist, daß als Interpolation eine Tiefpassfilterung erfolgt.

21. Anordnung nach einem der Ansprüche 18 bis 20, bei der
- die Bildsegmente durch Bildblöcke (BB) realisiert werden, und
- zwischen den Bildblöcken (BB) des Bildes (B) mindestens jeweils ein Bildpunkt (BP) keinem Bildblock (BB) zugeordnet wird.

22. Anordnung nach einem der Ansprüche 19 bis 21,
bei der die zweite Prozessoreinheit (P) derart eingerichtet ist, daß mehrere Filter für die Interpolation verwendet werden.

23. Anordnung nach Anspruch 22,
bei die zweite Prozessoreinheit (P) derart eingerichtet ist, daß die Auswahl der Filter abhängig von der Bildqualität eines Bildblockes (BB) erfolgt, wobei die Stärke des verwendeten Filters zunimmt mit der Verringerung der Bildqualität des Bildblocks (BB).

24. Anordnung nach Anspruch 22 oder 23,
bei der die zweite Prozessoreinheit (P) derart eingerichtet ist, daß die Auswahl der Filter abhängig von dem Bewegungsvektor eines Bildblocks (BB) erfolgt, wobei die Stärke des verwendeten Filters zunimmt mit der Größe des Bewegungsvektors, der dem jeweiligen Bildblock (BB) zugeordnet ist.

25. Anordnung nach einem der Ansprüche 18 bis 24,
bei der die erste Prozessoreinheit (P) derart eingerichtet ist, daß die Codierung nach dem H.263-Standard erfolgt.

26. Anordnung nach Anspruch 20, bei der die erste Prozessoreinheit (P) derart eingerichtet ist, daß
- die Codierung nach dem H.263-Standard erfolgt, und
- die Codierung von der ersten Anordnung der zweiten Anordnung unter Verwendung einer Capability-Tabelle gemäß dem H.245-Standard mitgeteilt wird.

27. Anordnung nach einem der Ansprüche 18 bis 26,
bei der eine Bewegungskompensation unter Verwendung des digitalisierten Bildes durchgeführt wird.

## Claims

1. Process for coding a digitalised image, wherein the digitalised image (B) comprises pixels (BP) grouped according to a specific image raster into a plurality of image segments (BB), wherein the image raster is spread in such a way that for at least a part of the image (B) a gap (Z) of at least one further pixel (BP) which is not associated with an image segment (BB), is present between image segments (BB), and wherein only the pixels (BP) associated with an image segment (BB), but not the further pixels (BP) located in a gap (Z), are coded.

2. Process for coding and decoding a digitalised image with pixels, wherein in a first arrangement (R1) the pixels (BP) of the digitalised image (B) are grouped according to a specific image raster into a plurality of image segments (BB), wherein in the first arrangement (R1) the image raster is spread in such a way that for at least a part of the image (B) a gap (Z) of at least a further image (BP) which is not associated with an image segment (BB) is present between image segments (BB), wherein in the first arrangement (R1) only the pixels (BP) associated with an image segment, but not the further pixels (BP) located in a gap (Z), are coded, wherein the coded pixels (BB) from the first arrangement (R1) are transferred to a second arrangement (R2), wherein in the second arrangement (R2) the image segments (BB) are decoded, wherein in the second arrangement (R2) new pixels (BP) are inserted between the decoded image segments (BB) corresponding to the non-coded further pixels (BP) of the coded image (B), and wherein in the second arrangement (R2) an interpolation is carried out between the image segments (BB), so coding information is associated with the new pixels (BP).

3. Process according to claim 1 or 2, in which a filtering of the image (B) to be coded takes place before coding.

4. Process according to claim 2, in which a low pass filtering takes place as interpolation.

5. Process according to claim 2,
- in which a filtering of the image (B) to be coded takes place before coding, and
- in which a low pass filtering takes place as interpolation.

6. Process according to claim 4 or 5, in which the low pass filtering substantially takes place on the image segments.

7. Process according to any one of claims 4 to 6, in which the interpolation filtering takes place after decoding.

8. Process according to claim 7, in which the interpolation filtering takes place substantially on the image segment edges.

9. Process according to any one of claims 1 to 8, in which the image segments are produced by image blocks (BB).

10. Process according to claim 9, in which at least one respective pixel (BP) is not associated with any image block (BB) between the image blocks (BB) of the image (B).

11. Process according to any one of claims 2 to 10, in which a plurality of filters are used for interpolation.

12. Process according to claim 11, in which the selection of filters is dependent on the image quality of an image block (BB), the strength of the filter used increasing with the reduction in image quality of the image block (BB).

13. Process according to claim 11 or 12, in which the selection of filters is dependent on the movement vector of an image block (BB), the strength of the filter used increasing with the size of the movement vector which is associated with the respective image block (BB).

14. Process according to any one of claims 1 to 8, in which coding takes place according to the H.263 standard.

15. Process according to claim 2,
- in which coding takes place according to the H.263 standard, and
- in which the coding from the first arrangement (R1) is communicated to the second arrangement (R2) using a capability table according to the H.245 standard.

16. Process according to any one of claims 1 to 15, in which a movement compensation is carried out using the digitalised image (B).

17. Process according to any one of the preceding claims, in which image segments (BB) which after spreading of the image raster due to the gaps (Z) are located at the edge (BRA) of the digitalised image (B) and do not have a specific number of pixels (BP), are filled with coding information with a constant value.

18. Arrangement for coding a digitalised image, wherein a first processor unit (P) is provided which is set up in such a way that
- the digitalised image (B) comprises pixels (BP) grouped according to a specific image raster in a plurality of image segments (BB),
- the image raster is spread in such a way that for at least a part of the image (B) a gap (Z) of at least a further pixel (BP) which is not associated with an image segment (BB) is present between image segments (BB), and
- only the pixels (BP) associated with an image segment (BB), but not the further pixels (BP) located in a gap (Z), are coded.

19. Arrangement for coding and decoding a digitalised image with pixels, with a first arrangement (R1) in which a first processor unit (P) is provided which is set up in such a way that
- the pixels (BP) of the digitalised image (B) are grouped according to a specific image raster into a plurality of image segments (BB),
- the image raster is spread in such a way that for at least a part of the image (B) a gap (Z) of at least a further pixel (BP) which is not associated with an image segment (BB) is present between image segments (BB), and
- only the pixels (BP) associated with an image segment (BB), but not the further pixels (BP) located in a gap (Z), are coded,
with a transfer means (L) with which the coded image segments (BB) from the first arrangement (R1) are transferred to a second arrangement (R2), wherein in the second arrangement (R2) a second processor unit (P) is provided which is set up in such a way, that
- the image segments (BB) are decoded,
- new images (BP) are inserted between the decoded image segments (BB) corresponding to the non-coded pixels (BP) of the coded image (B), and
- an interpolation is carried out between the image segments (BB), so coding information is associated with the new pixels (BP).

20. Arrangement according to claim 19, in which the second processor unit (P) is set up in such a way that a low pass filtering takes place as interpolation.

21. Arrangement according to any one of claims 18 to 20, in which
- the image segments are produced by image blocks (BB), and
- at least one respective pixel (BP) is not associated with any image block (BB) between the image blocks (BB) of the image (B).

22. Arrangement according to any one of claims 19 to 21, in which the second processor unit (P) is set up in such a way that a plurality of filters are used for the interpolation.

23. Arrangement according to claim 22, in which the second processor unit (P) is set up in such a way that the selection of the filters is dependent on the image quality of an image block (BB), the strength of the filter used increasing with the reduction in image quality of the image block (BB).

24. Arrangement according to claim 22 or 23, in which the second processor unit (P) is set up in such a way that the selection of the filters is dependent on the movement vector of an image block (BB), the strength of the filter used increasing with the size of the movement vector which is associated with the respective image block (BB).

25. Arrangement according to any one of claims 18 to 24, in which the first processor unit (P) is set up in such a way that coding takes place according to the H.263 standard.

26. Arrangement according to claim 20, in which the first processor unit (P) is set up in such a way, that
- coding takes place according to the H.263 standard and
- the coding from the first arrangement is communicated to the second arrangement using a capability table according to the H.245 standard.

27. Arrangement according to any one of claims 18 to 26, in which movement compensation is carried out using the digitalised image.

## Revendications

1. Procédé pour coder une image numérisée, dans lequel l'image numérisée (B) comprend des points d'image (BP) regroupés en plusieurs segments d'image (BB) conformément à une trame d'image déterminée,
selon lequel la trame d'image est étalée de telle sorte que pour au moins une partie d'image (B), qui existe entre les segments d'image (BB), un espace intercalaire (Z) d'au moins un autre point d'image (BP), qui n'est pas associé à un segment d'image (BB), est présent, et
selon lequel seuls sont codés les points d'image (BP), qui sont associés à un segment d'image (BB), mais pas les autres points d'image (BP) qui sont situés dans un espace intercalaire (Z).

2. Procédé pour le codage et le décodage d'une image numérisée comportant des points d'image,
selon lequel dans un premier dispositif (R1), les points d'image (BP) de l'image numérisée (B) sont regroupés en plusieurs segments d'image (BP) conformément à une trame d'image déterminée,
selon lequel dans le premier dispositif (R1), la trame d'image est étalée de telle sorte que pour au moins une partie d'image (B), qui existe entre les segments d'image (BB), un espace intercalaire (Z) d'au moins un autre point d'image (BP), qui n'est pas associé à un segment d'image (BB), est présent, et
selon lequel dans le premier dispositif (R1) seuls sont codés les points d'image (BP), qui sont associés à un segment d'image (BB), mais pas les autres points d'image (BP) qui sont situés dans un espace intercalaire (Z),
selon lequel les segments d'image codés (BB) du premier dispositif (R1) sont transmis à un second dispositif (R2),
selon lequel dans le second dispositif (R2), les segments d'image (BB) sont décodés,
selon lequel dans le second dispositif (R2), de nouveaux points d'image (BP) sont insérés entre les segments d'image décodés (BB), conformément aux autres points non codés (BP) de l'image codée (B), et
selon lequel dans le second dispositif (R2), une interpolation est exécutée entre les segments d'image (BB), ce qui permet d'associer une information de codage aux nouveaux points d'image (BP).

3. Procédé selon la revendication 1 ou 2, selon lequel un filtrage de l'image (B) devant être codée s'effectue avant le codage.

4. Procédé selon la revendication 2, selon lequel on effectue, comme interpolation, un filtrage passe-bas.

5. Procédé selon la revendication 2,
- selon lequel un filtrage de l'image (B) devant être codée s'effectue avant le codage, et
- selon lequel en tant qu'interpolation on exécute un filtrage passe-bas.

6. Procédé selon la revendication 4 ou 5, selon lequel le filtrage passe-bas s'effectue essentiellement au niveau des segments d'image.

7. Procédé selon l'une des revendications 4 à 6, selon lequel le filtrage par interpolation s'effectue après le décodage.

8. Procédé selon la revendication 7, selon lequel le filtrage par interpolation s'effectue essentiellement au niveau des bords des segments d'image.

9. Procédé selon l'une des revendications 1 à 8, selon lequel les segments d'image sont formés par des blocs (BB) de l'image.

10. Procédé selon la revendication 9, selon lequel les entre les blocs (BB) de l'image (B), au moins respectivement un point d'image (BP) est associé à un bloc (BB) de l'image.

11. Procédé selon l'une des revendications 2 à 10, selon lequel plusieurs filtres sont utilisés pour l'interpolation.

12. Procédé selon la revendication 11, selon lequel le choix des filtres s'effectue en fonction de la qualité d'un bloc (BB) de l'image, la force du filtre utilisé augmentant avec la réduction de la qualité d'image du bloc (BB) de l'image.

13. Procédé selon la revendication 11 ou 12, selon lequel la sélection du filtre s'effectue en fonction du vecteur de déplacement d'un bloc (BB) de l'image, la force du filtre utilisé augmentant avec la taille du vecteur de déplacement, qui est associé au bloc respectif (BB) de l'image.

14. Procédé selon l'une des revendications 1 à 8, selon lequel le codage s'effectue conformément à la norme H.263.

15. Procédé selon la revendication 2,
- selon lequel le codage s'effectue selon la norme H.263, et
- selon lequel le codage effectué par un premier dispositif (R1) est communiqué au deuxième dispositif (R2) moyennant l'utilisation d'un tableau de capacités conformément à la norme H.245.

16. Procédé selon l'une des revendications 1 à 15, selon lequel une compensation du déplacement est exécutée moyennant l'utilisation de l'image numérisée (B).

17. Procédé selon l'une des revendications précédentes, selon lequel les segments d'image (BB), qui après l'étalement de la trame d'image sont situés, en raison des espaces intercalaires (Z) sur le bord (BRA) de l'image numérisée (B) et ne possèdent pas un nombre déterminé de points d'image (BP), sont remplis par une information de codage ayant une valeur constante.

18. Dispositif pour coder une image numérisée, dans lequel il est prévu une première unité formant processeur (P), qui est agencée de telle sorte que
- l'image numérisée (B) comprend, conformément à une trame d'image déterminée, des points d'image (BP) regroupé en plusieurs segments d'image (BB) conformément à une trame d'image déterminée,
- la trame d'image est étalée de telle sorte que pour au moins une partie d'image (B), qui existe entre les segments d'image (BB), un espace intercalaire (Z) d'au moins un autre point d'image (BP), qui n'est pas associé à un segment d'image (BB), est présent, et
- seuls sont codés les points d'image (BP), qui sont associés à un segment d'image (BB), mais pas les autres points (BP) de l'image qui sont situés dans un espace intercalaire (Z).

19. Dispositif pour coder et décoder une image numérisée comportant des points image,
comportant un premier dispositif (R1) dans lequel il est prévu une première unité formant processeur (P), qui est agencée de telle sorte que
- les points (BP) de l'image numérisée (B) sont regroupés en plusieurs segments d'image (BB) conformément à une trame d'image déterminée,
- la trame d'image est étalée de telle sorte que pour au moins une partie d'image (B), qui existe entre les segments d'image (BB), un espace intercalaire (Z) d'au moins un autre point d'image (BP), qui n'est pas associé à un segment d'image (BB), est présent, et
- seuls sont codés les points d'image (BP), qui sont associés à un segment d'image (BB), mais pas les autres points d'image (BP) qui sont situés dans un espace intercalaire (Z),
comportant un moyen de transmission (L) au moyen duquel les segments d'image (BP) codés sont transmis par le premier dispositif (R1) à un second dispositif (R2),
selon lequel dans le second dispositif (R2) il est prévu une seconde unité à processeur (P) qui est agencée de telle sorte que
- les segments d'image (BB) sont décodés,
- de nouveaux points d'image (BP) sont insérés entre les segments d'image décodés (BB), conformément aux points d'image non codés (BP) de l'image codée (B),
- une interpolation est exécutée entre les segments d'image (BB), ce qui a pour effet qu'une information de codage est associée aux nouveaux points d'image (BP).

20. Dispositif selon la revendication 19, dans lequel la seconde unité à processeur (P) est agencée de telle sorte qu'un filtrage passe-bas est exécuté en tant qu'interpolation.

21. Dispositif selon l'une des revendications 18 à 20, dans lequel
- les segments d'image sont formés par des blocs (BB) de l'image, et
- au moins respectivement un point d'image (BP) n'est associé à aucun bloc (BB) de l'image.

22. Dispositif selon l'une des revendications 19 à 21, dans lequel la seconde unité à processeur (P) est agencée de telle sorte que plusieurs filtres sont utilisés pour l'interpolation.

23. Dispositif selon la revendication 22, dans lequel la seconde unité à processeur (P) est agencée de telle sorte que le choix des filtres s'effectue en fonction de la qualité d'image d'un bloc (BB) de l'image, la force du filtre utilisé augmentant lorsque la qualité d'image du bloc (BB) de l'image diminue.

24. Dispositif selon la revendication 22 ou 23, dans lequel la seconde unité à processeur (P) est agencée de telle sorte que le choix des filtres s'effectue en fonction du vecteur de déplacement d'un bloc (BB) de l'image, la force du filtre utilisé augmentant lorsque la taille du vecteur de déplacement, qui est associé au bloc respectif (BB) de l'image, augmente.

25. Dispositif selon l'une des revendications 18 à 24, dans lequel la première unité à processeur (P) est agencée de telle sorte que le codage s'effectue selon la norme H.263.

26. Dispositif selon la revendication 20, dans lequel la première unité à processeur (P) est agencée de telle sorte que
- le codage s'effectue selon la norme H.263, et
- le codage est communiqué par le premier dispositif au second dispositif moyennant l'utilisation d'un tableau de capacité conformément à la norme H.245.

27. Dispositif selon les revendications 18 à 26, dans lequel une compensation de déplacement est exécutée moyennant l'utilisation de l'image numérisée..
